# EUROPEAN PATENT APPLICATION

(11) **EP 4 071 921 A1**
(43) Date of publication of application: **12.10.2022**
(21) Application number: 21912310.6
(22) Date of filing: 09.02.2021
(51) Int. Cl.: H01M 50/543, H01M 10/48

(54) **BATTERY, ELECTRIC DEVICE, AND METHOD FOR MANUFACTURING BATTERY**

(71) Applicant: Contemporary Amperex Technology Co., Limited, Fujian 352100 (CN)
(72) Inventor: LI, Jinfeng, Ningde Fujian 352100 (CN); QIN, Feng, Ningde Fujian 352100 (CN); WANG, Peng, Ningde Fujian 352100 (CN); WANG, Lei, Ningde Fujian 352100 (CN)
(74) Representative: Ziebig & Hengelhaupt Patent- und Rechtsanwaltskanzlei PartG mbB
(86) International application number: PCT/CN2021/076277
(87) International publication number: WO 2022/170483

(57) **Abstract**

Embodiments of this application provide a battery, an electrical apparatus, and a method and an apparatus for preparing battery. The battery includes a battery cell that includes an end cover and an electrode terminal, where the end cover is arranged at an end portion of the battery cell along a first direction, the electrode terminal is arranged on the end cover and protrudes toward a direction facing away from inside the battery cell, the electrode terminal includes two end faces and a circumferential side face, the two end faces are arranged along the first direction, and the circumferential side face connects the two end faces; and a sampling assembly, abutting against the circumferential side face, to collect an electrical signal of the battery cell.

## Description

### TECHNICAL FIELD

This application relates to the field of batteries, and more specifically, to a battery, an electrical apparatus, and a preparation method of battery.

### BACKGROUND

With the continuous development of battery technologies, higher performance requirements are imposed on batteries, requiring consideration of design factors in multiple aspects for batteries.

### SUMMARY

This application provides a battery, an electrical apparatus, and a preparation method of battery, so as to perform separate sampling for a plurality of battery cells that are electrically connected, improve energy density of the battery, and enhance safety for the battery.

A first aspect provides a battery, including a battery cell that includes an end cover and an electrode terminal, where the end cover is arranged at an end portion of the battery cell along a first direction, the electrode terminal is arranged on the end cover and protrudes toward a direction facing away from inside the battery cell, the electrode terminal includes two end faces and a circumferential side face, the two end faces are arranged along the first direction, and the circumferential side face connects the two end faces; and a sampling assembly, abutting against the circumferential side face, to collect an electrical signal of the battery cell.

In the technical solutions of embodiments of this application, the sampling assembly abutting against the circumferential side face of the electrode terminal is utilized to collect a signal of the battery cell that has the end cover and the electrode terminal. This can reduce space occupied by the sampling assembly, make a structure more compact, and improve overall energy density of the battery. In addition, a voltage or temperature signal of each battery cell can be learned in real time, thereby further improving the safety of the battery.

In some embodiments, the sampling assembly includes a connection member and a support member, the connection member is configured to abut against the electrode terminal, and the connection member is fastened to the support member. In this way, the support member can be used to maintain contact between the connection member and the electrode terminal, achieving stable electrical connection.

In some embodiments, the connection member has an abutting portion and a foot portion that are connected to each other, the foot portion is fixedly connected to the support member, the abutting portion has elasticity, and the abutting portion abuts against the electrode terminal. By using this structure, the abutting portion that has elasticity can be utilized to abut against the electrode terminal and adapt to the electrode terminal in shape through elastic deformation of the abutting portion, thereby achieving more stable electrical connection between the connection member and the electrode terminal. In addition, in such an electrical connection manner, external force such as gravity or extruding force can be effectively utilized to achieve stable electrical connection, without a need of other connection and fixing means. In addition, by fixedly connecting the foot portions of the connection member to the support member, an electrical signal can be transmitted by using the support member, a transmission line arranged in the support member, or the like, and the sampling assembly can be formed as an integrated structure. Therefore, arrangement space of the battery can be utilized more effectively, and the energy density of the battery can be improved.

In some embodiments, the connection member has two foot portions, and two ends of the abutting portion are connected to the two foot portions, respectively. To be specific, the technical solutions of this application use a manner of two-end support, to support the abutting portion by using the two foot portions. Compared with a manner of single-side support such as a cantilever beam, the manner of two-end support achieves more stable support, avoids unstable electrical connection caused by easy waggle of a cantilever beam structure, and helps ensure effective electrical connection.

In some embodiments, the abutting portion is in surface contact with the electrode terminal and fits a shape of the circumferential side face of the electrode terminal. In this way, the abutting portion that is in surface contact with the electrode terminal can elastically deform based on the shape of the circumferential side face of the electrode terminal to adaptively cooperate with the electrode terminal closely, thereby further improving stability of contact.

In some embodiments, an area of a contact surface between the electrode terminal and the abutting portion is more than 1/6 of an entire circumferential area of the circumferential side face. Therefore, when the abutting portion is in surface contact with the electrode terminal, the contact area is controlled within this range, thereby achieving more stable contact and stable signal collection.

In some embodiments, the abutting portion is in point contact with the electrode terminal and there are two or more contact points. To be specific, the abutting portion and the electrode terminal in this application may alternatively be electrical connected through point contact. When the abutting portion is in point contact with the electrode terminal, they are in contact with each other through two or more points, which can ensure stability of contact sampling.

In some embodiments, a position at which the abutting portion abuts against the electrode terminal is coated with a conductive medium. When the abutting portion abuts against a surface of the electrode terminal, the conductive medium is coated from the contact position onto the electrode terminal. This can prevent passivation of the surface of the electrode terminal while ensuring normal conductivity of the connection member.

In some embodiments, the sampling assembly further includes a transmission line, the transmission line is configured to transmit an electrical signal to a signal processor, the transmission line and the foot portions are embedded inside the support member, and the transmission line is electrically connected to the foot portions. Because the transmission line is electrically connected to the foot portions, the foot portions of the connection member can transmit an electrical signal collected by the abutting portion to the transmission line, and the transmission line transmits the signal to a collecting component or the signal processor. In addition, the transmission line and the foot portions of the connection member are arranged inside the support member in an embedded manner, which can form the sampling assembly as an integrated structure, saves space while effectively achieving electrical connection, and facilitates manufacturing and assembling.

In some embodiments, there is a gap between the abutting portion and the support member in an abutting direction, to provide an elastic deformation space for the abutting portion. In some embodiments, the support member is provided with a concave portion, the concave portion matches the electrode terminal in shape, and the concave portion is arranged opposite to the abutting portion and is recessed toward a direction facing away from the abutting portion, to form the gap. By reserving a deformation space for the elastic abutting portion, a structural failure can be avoided and an assembly yield rate can be improved.

In some embodiments, in the first direction, a width of the connection member is less than a height by which the electrode terminal protrudes from the end cover. As described above, the abutting portion of the connection member is in contact with the circumferential side face of the electrode terminal. In this way, in the first direction in which the end faces of the electrode terminal are opposite to each other, the width of the connection member is made less than the protruding height of the electrode terminal, to prevent the connection member from extending beyond the end face of the electrode terminal.

In some embodiments, the battery includes a plurality of battery cells, a gap is formed between two battery cells adjacent along the first direction, and the sampling assembly is arranged inside the gap. By arranging the sampling assembly inside the gap formed between adjacent battery cells, space occupied by the sampling assembly can be reduced, and unoccupied space of the battery cell can be efficiently utilized to arrange the sampling assembly, thereby making the structure more compact and improving overall energy density of the battery.

In some embodiments, the support member is arranged inside the gap. By using this structure, the support member can be positioned conveniently.

In some embodiments, the plurality of battery cells are arranged in the first direction and electrically connected to form a battery cell column, a plurality of battery cell columns are arranged in a second direction to form a battery cell matrix, and the second direction is perpendicular to the first direction. Therefore, in this battery cell matrix, the first direction is a column direction, and the second direction is a row direction. By collecting voltage or temperature signals of electrode terminals between battery cells adjacent in the column direction, a voltage or temperature status of each battery cell arranged in the column direction can be learned, and safety of each battery cell can be controlled effectively.

The battery cells may be electrically connected in series or in parallel. Respective protruding electrode terminals of two battery cells adjacent in the first direction may be electrically connected, or an electrode terminal of one battery cell protrudes to be electrically connected to a housing or end cover of the other battery cell, or they may be connected through a connection plate. As described above, the first direction is a direction in which two end faces of an electrode terminal are arranged opposite to each other. Herein, the first direction is also a direction in which two electrically connected battery cells are arranged adjacent to each other.

In some embodiments, the support member extends along the second direction, there are a plurality of connection members, and at least two connection members are electrically connected to make at least two electrode terminals against which the at least two connection members abut equipotential. That is, a plurality of (two or more, for example, three) battery cells that are adjacent to each other in the second direction (the row direction) are electrically connected to a plurality of connection members that are adjacent to each other in the row direction. Because the sampling assembly has a plurality of connection members arranged along the second direction and each connection member is connected to a circumferential side face of an electrode terminal of a corresponding battery cell, the sampling assembly can collect electrical signals of a plurality of battery cells arranged in the second direction. In addition, the electrode terminals of the plurality of battery cells electrically connected to the plurality of connection members of the sampling assembly have equal potential, thereby achieving voltage balance between the battery cells and improving consistency of the battery cells.

In some embodiments, a plurality of layers of battery cell matrices are arranged in a third direction, and the third direction is perpendicular to the first direction and the second direction. That is, the third direction is a direction that is perpendicular to both the row direction and the column direction of the battery cell matrix. By arranging a plurality of layers of battery cell matrices in the third direction, an arrangement space inside the battery can be sufficiently utilized.

In some embodiments, a separation component is arranged between two layers of battery cell matrices to separate them. When a plurality of layers of battery cell matrices are configured, separation components are arranged between layers to facilitate assembling. In addition, the separation component can support the layers of battery cell matrices arranged on two sides of the separation component.

In some embodiments, in the third direction, the sampling assembly is arranged on each of the two sides of the separation component, to perform sampling for each of the two layers of battery cell matrices separated by the separation component. As described above, the separation component is arranged between two layers of battery cell matrices. Therefore, by arranging the sampling assembly on each of the two sides of the separation component in the third direction, the separation component can be utilized to install and support the sampling assemblies on both sides, space inside the battery can be sufficiently utilized, and the energy density can be improved effectively.

In some embodiments, a surface of the support member that faces the separation component forms a shape that fits the separation component. For example, if the separation component is flat plate-shaped, the surface of the support member that faces the separation component forms a flat plate shape; or if the separation component is wave-shaped, the surface of the support member that faces the separation component forms a wave shape accordingly. In this way, the separation component can be sufficiently utilized to support the support member.

In some embodiments, the electrode terminal is arranged at each of two ends of the battery cell in the first direction, and the electrode terminals of two adjacent battery cells are arranged opposite to each other and soldered directly. That is, both positive and negative electrode terminals of the battery cell both protrude from end covers, and the electrode terminals protruding from the end covers achieve electrical connection through soldering. This eliminates the need to additionally arrange a mechanism for electrical connection, and can reduce a size of a structure achieving electrical connection and sufficiently utilize space inside the battery for arranging battery cells, thereby improving the energy density of the battery and making the electrical connection stable.

In some embodiments, an abutting region between the sampling assembly and the electrode terminal avoids a soldering region of the electrode terminal. When two electrode terminals achieve electrical connection through direct soldering, a soldered seam is formed in the soldering region. By making the sampling assembly and the soldering region not interfere with each other, a decrease in sampling precision can be avoided and assembly precision can be improved. For example, the abutting portion of the sampling assembly and the soldering region are staggered in the first direction, or a convex opening for soldering is formed, so that the soldering region does not protrude from the circumferential side face of the electrode terminal.

A second aspect provides an electrical apparatus, including the battery according to the first aspect, where the battery is configured to supply electric energy.

A third aspect provides a preparation method of battery, including: providing a battery cell, where the battery cell includes an end cover and an electrode terminal, the end cover is arranged at an end portion of the battery cell along a first direction, the electrode terminal is arranged on the end cover and protrudes toward a direction facing away from inside the battery cell, the electrode terminal includes two end faces and a circumferential side face, the two end faces are arranged along the first direction, and the circumferential side face connects the two end faces; and providing a sampling assembly, where the sampling assembly abuts against the circumferential side face, to collect an electrical signal of the battery cell.

### BRIEF DESCRIPTION OF DRAWINGS

The drawings described herein are intended to provide a further understanding of this application and constitute a part of this application. Example embodiments of this application and descriptions thereof are intended to explain this application, and do not constitute any inappropriate limitation on this application. Among the drawings:
FIG. 1 is a schematic diagram of a vehicle according to an embodiment of this application;
FIG. 2 is a schematic structural diagram of a battery according to an embodiment of this application;
FIG. 3 is a schematic structural diagram of a battery cell and a sampling assembly according to an embodiment of this application;
FIG. 4 is a schematic structural diagram of a sampling assembly according to an embodiment of this application;
FIG. 5 is a schematic structural diagram of a combination of a battery cell and a sampling assembly according to an embodiment of this application, where FIG. 5(a) shows a state in which the sampling assembly is not in contact with an electrode terminal, and FIG. 5(b) shows a state in which the sampling assembly is in contact with an electrode terminal and deforms;
FIG. 6 is a schematic structural diagram of point contact between a sampling assembly and an electrode terminal according to this application, where FIG. 6(a) shows one embodiment in which the sampling assembly is in point contact with the electrode terminal, and FIG. 6(b) shows another embodiment in which the sampling assembly is in point contact with the electrode terminal;
FIG. 7 is a schematic structural diagram of arranging a sampling assembly inside a gap between two battery cells according to an embodiment of this application;
FIG. 8 is a schematic structural diagram of arranging battery cells as a matrix according to an embodiment of this application;
FIG. 9 is a schematic structural diagram of a support member to which a plurality of connected connection members are fastened according to an embodiment of this application;
FIG. 10 is a schematic structural diagram of a temperature sampler of a sampling assembly according to an embodiment of this application; and
FIG. 11 is a schematic flowchart of a preparation method of battery according to an embodiment of this application.

### DETAILED DESCRIPTION OF EMBODIMENTS

To make the objectives, technical solutions, and advantages of the embodiments of this application clearer, the following clearly describes the technical solutions in the embodiments of this application with reference to the accompanying drawings in the embodiments of this application. Apparently, the embodiments described are some rather than all of the embodiments of this application. All other embodiments obtained by a person of ordinary skill in the art based on the embodiments of this application without creative efforts shall fall within the protection scope of this application.

Unless otherwise defined, all technical and scientific terms used in this application have the same meanings as commonly understood by a person skilled in the technical field to which this application belongs. The terms used in the specification of this application are merely intended to describe specific embodiments but not intended to constitute any limitation on this application. The terms "include" and "have" and any variants thereof in the specification, claims, and accompanying drawings of this application are intended to cover a nonexclusive inclusion. The terms "first", "second", or the like in the specification and claims or accompanying drawings of this application are intended to distinguish between different objects rather than describing a specific order or a primary and secondary relationship.

The term "embodiment" mentioned in this application means a specific feature, structure, or characteristic described with reference to the embodiment may be included in at least one embodiment of this application. The presence of this term in various parts of the specification does not necessarily mean the same embodiment, and does not mean an independent or alternative embodiment mutually exclusive with other embodiments. A person skilled in the art explicitly and implicitly understands that the embodiments described in this application may be combined with other embodiments.

In the descriptions of this application, it should be noted that, unless otherwise specified or defined explicitly, the terms "mounted", "interconnected", "connected", and "attached" should be interpreted in a broad sense, for example, may be fixedly connected, or detachably connected, or integrally connected, may be directly connected, or indirectly connected through an intermediate medium, or internally connected between two elements. A person of ordinary skill in the art can understand specific meanings of these terms in this application based on specific situations.

The term "and/or" in this application is merely an association relationship that describes associated objects, indicating that three relationships may exist. For example, A and/or B may indicate three situations: A exists independently; A and B exist simultaneously; and B exists independently. In addition, the character "/" in this application generally indicates that associated objects are in an "or" relationship.

"A plurality of" in this application indicates two or more (including two). Likewise, "a plurality of sets" indicates two or more sets (including two sets), and "a plurality of pieces" indicates two or more pieces (including two pieces).

A battery mentioned in the embodiments of this application refers to a single physical module that includes one or more battery cells to provide a higher voltage and capacity. For example, the battery mentioned in this application may include a battery module, a battery pack, or the like.

A battery cell includes an electrode assembly and an electrolyte solution, and the electrode assembly includes a positive electrode plate, a negative electrode plate, and a separator. The battery cell mainly relies on movement of metal ions between the positive electrode plate and the negative electrode plate to operate. The positive electrode plate includes a positive electrode current collector and a positive electrode active material layer, where a surface of the positive electrode current collector is coated with the positive electrode active material layer. A current collector not coated with the positive electrode active material layer protrudes from a current collector already coated with the positive electrode active material layer, and the current collector not coated with the positive electrode active material layer serves as a positive tab. A lithium-ion battery is used as an example. The positive electrode current collector may be made of aluminum and the positive electrode active material may be lithium cobaltate, lithium iron phosphate, ternary lithium, lithium manganate, or the like. The negative electrode plate includes a negative electrode current collector and a negative electrode active material layer, where a surface of the negative electrode current collector is coated with the negative electrode active material layer. A current collector not coated with the negative electrode active material layer protrudes from a current collector already coated with the negative electrode active material layer, and the current collector not coated with the negative electrode active material layer serves as a negative tab. The negative electrode current collector may be made of copper and the negative electrode active material may be carbon, silicon, or the like. To allow a large current to pass without fusing, a plurality of positive tabs are provided and stacked together, and a plurality of negative tabs are provided and stacked together. The separator may be made of PP, PE, or the like. In addition, the electrode assembly may be a roll-type structure or a laminated structure, this embodiment of this application is not limited thereto.

For the development of battery technologies, design factors in a plurality of aspects need to be considered, such as performance parameters including energy density, cycle life, discharge capacity, and charging and discharging rates. In addition, battery safety needs to be considered.

At present, a battery of an electric vehicle usually includes scores of or even thousands of battery cells.

In practical application, battery cells differ slightly in some parameters (for example, voltage, internal resistance, and SOC (state of charge)). As use time increases, differences between battery cells becomes increasingly large. If these differences are left unattended, the battery cells have poor consistency, which affects performance of the battery and may even lead to severe consequences and accidents such as fire and explosion. Therefore, a sampling apparatus is arranged inside a battery so as to perform corresponding control and processing when exceptions are discovered.

In the prior art, a sampling structure is usually arranged at an end face of a battery cell to perform sampling.

However, the following problem exists in the prior art: Because the sampling structure is arranged at the end face of the battery cell, space inside the battery is occupied, and overall energy density of the battery decreases. In addition, sampling cannot be performed for all battery cells of the battery by using a simple structure.

In view of this, this application provides a technical solution, which is a battery, including a battery cell that includes an end cover and an electrode terminal, where the end cover is arranged at an end portion of the battery cell along a first direction, the electrode terminal is arranged on the end cover and protrudes toward a direction facing away from inside the battery cell, the electrode terminal includes two end faces and a circumferential side face, the two end faces are arranged along the first direction, and the circumferential side face connects the two end faces; and a sampling assembly, abutting against the circumferential side face, to collect an electrical signal of the battery cell. In this way, real-time signal collection can be performed on the circumferential side face of each battery cell. A voltage or temperature signal of each battery cell can be learned in real time, thereby further improving safety of the battery. In addition, this can reduce space occupied by the sampling assembly, make a structure more compact, and improve overall energy density of the battery.

An embodiment of this application provides an electrical apparatus, with a battery configured to supply electric energy.

The technical solutions described in the embodiments of this application are applicable to various apparatuses using batteries, such as mobile phones, portable devices, notebook computers, battery vehicles, electric toys, electric tools, electric vehicles, ships, or spacecrafts, where the spacecrafts may be aircrafts, rockets, space shuttles, or spacecrafts.

It should be understood that the technical solutions described in the embodiments of this application are not limited to being applicable to the devices described above, and are also applicable to all devices using batteries. However, for brevity of description, an electric vehicle is used as an example for description of the following embodiments.

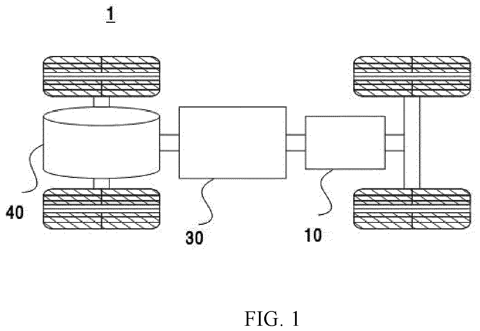

For example, FIG. 1 is a schematic structural diagram of a vehicle 1 according to an embodiment of this application. The vehicle 1 may be a fuel vehicle, a gas vehicle, or a new energy vehicle, and the new energy vehicle may be a battery electric vehicle, a hybrid electric vehicle, an extended-range electric vehicle, or the like. Inside the vehicle 1, a motor 40, a controller 30, and a battery 10 may be arranged, where the controller 30 is configured to control the battery 10 to supply power to the motor 40. For example, the battery 10 may be arranged at the bottom or at the front or rear of the vehicle 1. The battery 10 may be configured to supply power to the vehicle 1, for example, the battery 10 may be used as an operating power source of the vehicle 1. The battery 10 may also be used for a circuit system of the vehicle 1, for example, used to meet an operating power requirement during starting, navigation, and running of the vehicle 1. In another embodiment of this application, the battery 10 not only may be used as the operating power source of the vehicle 1, but also may be used as a drive power source of the vehicle 1, to replace or partly replace fuel or natural gas to provide drive power for the vehicle 1.

To meet different power use requirements, a battery may include a plurality of battery cells, and the plurality of battery cells may be connected in series, parallel, or both series and parallel. Connection in both series and parallel means a combination of connection in series and connection in parallel.

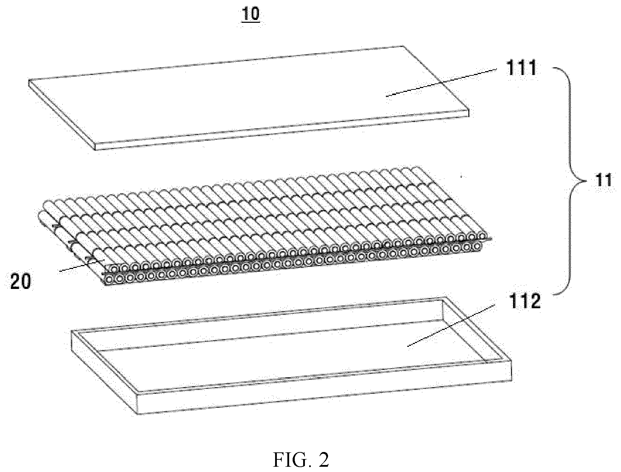

For example, FIG. 2 is a schematic structural diagram of a battery 10 according to an embodiment of this application. The battery 10 may include a plurality of battery cells 20. The battery 10 may further include a box 11. The box 11 is a hollow structure and the plurality of battery cells 20 are accommodated inside the box 11. As shown in FIG. 2, the box 11 may include two parts, respectively referred to as top cover 111 and casing 112 herein, and the top cover 111 and the casing 112 are locked together. Shapes of the top cover 111 and the casing 112 may be determined based on a shape of combination of the plurality of battery cells 20. The top cover 111 and the casing 112 each may have an opening. For example, the top cover 111 and the casing 112 each may be a hollow cuboid and each have an opening on only one surface. The opening of the top cover 111 and the opening of the casing 112 are arranged opposite to each other, and the top cover 111 and the casing 112 are locked to form a box having a closed cavity. Alternatively, the top cover 111 may be a cuboid having an opening while the casing 112 is plate-shaped, or the casing 112 is a cuboid having an opening while the top cover 111 is plate-shaped. The top cover 111 and the casing 112 are arranged opposite to each other and are locked to form a box having an enclosed cavity. The plurality of battery cells 20 are connected in parallel, series, or both series and parallel and then placed inside the box formed after the top cover 111 and the casing 112 are locked.

Optionally, the battery 10 may further include another structure, and details are not described herein. For example, a combination of a plurality of layers of battery cells 20 is arranged, or a plurality of battery cells 20 form a battery module and the battery 10 is provided with a plurality of battery modules 10, a collecting component, a signal collection bundle, a signal processor, or the like.

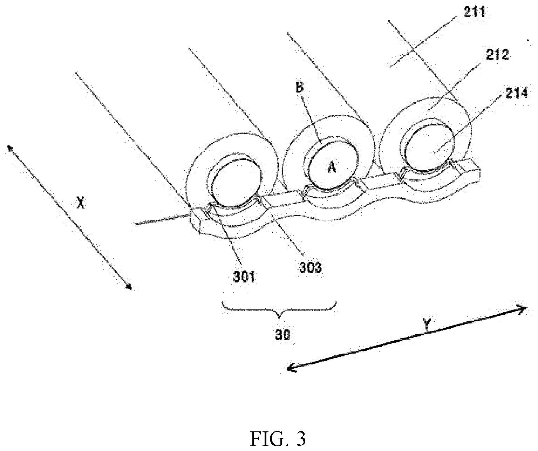

FIG. 3 is a schematic structural diagram of a combination of a battery cell 20 and a sampling assembly 30 according to an embodiment of this application.

The battery cell 20 includes a housing 211, an end cover 212, and one or more electrode assemblies (not shown) arranged inside the housing 211. A shape of the housing 211 is determined based on a shape of combination of the one or more electrode assemblies. For example, the housing 211 may be a hollow cuboid, cube, or cylinder, and the housing 211 has an opening so that the one or more electrode assemblies can be placed inside the housing 211. The end cover 212 covers the opening and is connected to the housing 211, to form an enclosed cavity to accommodate the electrode assemblies. The housing 211 is filled with an electrolyte, for example, an electrolyte solution.

The battery cell 20 has positive and negative electrode leading portions, one of which may be an electrode terminal 214 arranged on the end cover 212, and the other of which may be a portion of the housing 211 or a portion of the end cover 212. Alternatively, both may be electrode terminals 214 arranged on the end cover 212. The protruding electrode terminal 214 may be in one of various shapes such as cylinder, cuboid, cube, gengon, or the like. In this embodiment, the electrode terminal 214 is described as a cylinder-shaped structure. In addition, the battery cell 20 may be a cuboid, cube, or cylinder. In this embodiment, the battery cell 20 is described as a structure that is a cylinder whose axis coincides with an axis of the cylinder-shaped electrode terminal 214.

As shown in FIG. 3, in the battery cell 20, the end cover 212 is arranged at an end portion of the battery cell 20 along a first direction X, and the electrode terminal 214 is arranged on the end cover 212 and protrudes toward a direction facing away from inside the battery cell 20. The electrode terminal 212 includes two end faces A (with only one end face shown in the figure) and a circumferential side face B, the two end faces A are arranged along the first direction X, and the circumferential side face B connects the two end faces A. The sampling assembly 30 abuts against the circumferential side face B of the electrode terminal 214, to collect an electrical signal of the battery cell 20.

Because the sampling assembly 30 abuts against the circumferential side face B of the electrode terminal 214 protruding the end cover 212, the sampling assembly 30 can be arranged by using space formed at the circumferential side face B of the electrode terminal 214 after the electrode terminal 214 protrudes from the end cover 212. The sampling assembly 30 is arranged by utilizing the space that is formed, in such a manner, by the side face of the electrode terminal 214 and the end cover 212 and that would be left unused. This can sufficiently utilize space inside the battery 10, increase the energy density of the battery 10 accordingly, and perform separate sampling for all battery cells 20 in the battery 10 with a simple structure, when compared with a structure in which a sampling member is arranged at the end face A of the battery cell 20. A position on which the sampling assembly 30 performs signal collection may be any position on the circumferential side face B of the electrode terminal 214.

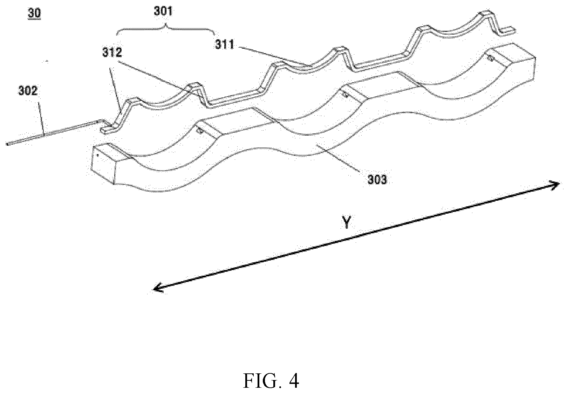

FIG. 4 is a schematic structural diagram of a sampling assembly 30 according to an embodiment of this application.

The sampling assembly 30 includes a connection member 301 and a support member 303, the connection member 301 is configured to abut against an electrode terminal 214, and the connection member 301 is fastened to the support member 303. In this way, contact between the connection member 301 and the electrode terminal 214 can be maintained by using the support member 303, thereby achieving stable electrical connection.

A signal collected by the sampling assembly 30 is transmitted to a signal processor or the like through a signal collection bundle (for example, an FFC) or a signal transmission line (for example, an FPC) or the like, to implement control on a battery cell 20. A specific structure is not described herein.

The connection member 301 has an abutting portion 311 and a foot portion 312 that are connected to each other, the foot portion 312 is fixedly connected to the support member 303, and the abutting portion 311 has elasticity and protrudes against the support member 303. By using this structure, the abutting portion 311 that has elasticity can be utilized to come into contact with the electrode terminal 214 and adapt to a shape of the electrode terminal 214 through elastic deformation of the abutting portion 311, thereby achieving more stable electrical connection between the connection member 301 and the electrode terminal 214. In addition, in such an electrical connection manner, external force such as gravity or extruding force can be effectively utilized to achieve stable electrical connection, without a need of other connection and fixing means. In addition, by fixedly connecting the foot portion 312 of the connection member 301 to the support member 303, an electrical signal can be transmitted by using the support member 303, a transmission line arranged in the support member 303, or the like, and the sampling assembly 30 can be formed as an integrated structure. Therefore, arrangement space of the battery can be utilized more effectively, and the energy density of the battery can be improved.

The connection member 301 is made of a conductive material, for example, metal such as copper. When the support member 303 is utilized to transmit an electrical signal, the support member 303 is made of a conductive material. When the electrical signal is transmitted through the transmission line, the support member 303 may alternatively be made of an insulation material, for example, made through injection.

In addition, the connection member 301 has two foot portions 312, and two ends of the abutting portion 311 are connected to the two foot portions 312, respectively. If a manner of one-side support with a cantilever beam is used to support the connection member 301, the connection member 301 is prone to waggle, resulting in unstable electrical connection. Compared with this, in this embodiment of this application, the abutting portion 311 is connected to the two foot portions 312 to implement two-side support, thereby achieving more stable support and helping ensure effective electrical connection.

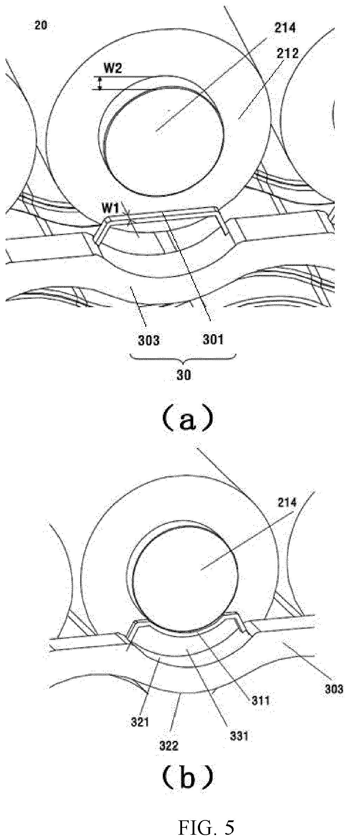

FIG. 5 is a schematic structural diagram of a combination of a battery cell 20 and a sampling assembly 30 according to an embodiment of this application, where FIG. 5(a) shows a state in which the sampling assembly 30 is not in contact with an electrode terminal 214, and FIG. 5(b) shows a state in which the sampling assembly 30 is in contact with an electrode terminal 214 and deforms.

As shown in FIG. 5(a), in a first direction X, a width W1 of a connection member 301 is less than a height W2 by which the electrode terminal 214 protrudes from an end cover 212. As described above, an abutting portion 311 of the connection member 301 is in contact with a circumferential side face B of the electrode terminal 214. To prevent the connection member 301 from extending beyond an end face A of the electrode terminal 214 and affecting assembling of other components, the width W1 of the connection member 301 is made less than the protruding height W2 of the electrode terminal 214 in the first direction X in which the end faces A of the electrode terminal 214 are opposite to each other.

As shown in FIG. 5(b), the abutting portion 311 elastically deforms, comes into surface contact with the electrode terminal 214, and fits a shape of the circumferential side face B of the electrode terminal 214. In addition, when the abutting portion 311 is in surface contact with the electrode terminal 214, an area of a contact surface between the abutting portion 311 and the electrode terminal 214 is more than 1/6 of an entire circumferential area of the circumferential side face B of the electrode terminal 214. In this way, the abutting portion 311 that is in surface contact with the electrode terminal 214 elastically deforms based on the shape of the circumferential side face B of the electrode terminal 214, to adaptively cooperate with the electrode terminal 214 closely. In addition, the contact area is large enough, to improve stability of surface contact.

The abutting portion 311 elastically deforms when in contact with the electrode terminal 214. To provide space for the elastic deformation of the abutting portion 311, there is a gap between the abutting portion 311 and a support member 303 in a direction in which they abut against each other. In this embodiment, a concave portion 331 is formed on a surface 321 of the support member 303 that is close to the abutting portion 311. The concave portion 331 matches the electrode terminal 214 in shape, and the concave portion 331 is arranged opposite to the abutting portion 311 and is recessed toward a direction facing away from the abutting portion 311 to form the gap, so as to provide corresponding space for the elastic deformation when the abutting portion 311 elastically deforms. In this way, when the abutting portion 311 elastically deforms, it does not collide with the surface 321 of the support member 303 that is close to the abutting portion 311, and deformation of the abutting portion 311 is not affected.

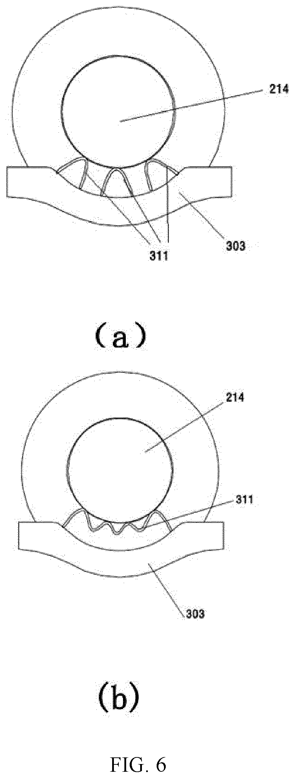

FIG. 6 is a schematic structural diagram of point contact between a sampling assembly 30 and an electrode terminal 214 according to an embodiment of this application.

In this embodiment of this application, an abutting portion 311 is in point contact with the electrode terminal 214 and there are two or more contact points. In one embodiment, as shown in FIG. 6(a), a plurality of abutting portions 311 protrude from a support member 303 and come into point contact with the electrode terminal 214. In another embodiment, as shown in FIG. 6(b), one abutting portion 311 protrudes from the support member 303, a surface of contact between the abutting portion 311 and the electrode terminal 214 is wave-shaped, and the abutting portion 311 comes into point contact with the electrode terminal 214 at a plurality of points. In this way, when the abutting portion 301 is in point contact with the electrode terminal 214, stability of contact and sampling can also be ensured.

In some embodiments, a position at which the abutting portion 311 abuts against the electrode terminal 214 is coated with a conductive medium. The electrode terminal 214 is made of metal such as aluminum, and surface passivation may occur after long-term use, which affects signal collection. Therefore, a protective layer needs to be formed on a surface of the electrode terminal 214. By coating a surface of the abutting portion 301 with the conductive medium, the electrode terminal 214 is coated with the conductive medium through contact with the abutting portion 311 when the abutting portion 311 abuts against the electrode terminal 214. This can prevent passivation from occurring on the surface of the electrode terminal 214 while ensuring normal conductivity of a connection member 301. The conductive medium refers to a conductive material that can be well coated on the abutting portion 311, such as conductive glue or conductive grease.

In an embodiment of this application, the sampling assembly 30 further includes a transmission line 302, and the transmission line 302 is configured to transmit an electrical signal to a signal processor. The transmission line 302 and a part of the foot portion 312 of the connection member 301 are embedded inside the support member 303, and the transmission line 302 is electrically connected to the foot portion 312. Because the transmission line 302 is electrically connected to the foot portion 312, the foot portion 312 of the connection member 301 can transmit an electrical signal collected by the abutting portion 311 to the transmission line 302, and the transmission line 302 transmits the signal to a collecting component or a signal processor. The transmission line 302 is embedded inside the support member 303, which reduces a possibility of contact between the transmission line 302 and another component, and increases accuracy of transmission of an electrical signal. In addition, the transmission line 302 and a part of the foot portion 312 are arranged inside the support member 303 in an embedded manner, which can form the sampling assembly 30 as an integrated structure, saves space while effectively achieving electrical connection, and facilitates manufacturing and assembling.

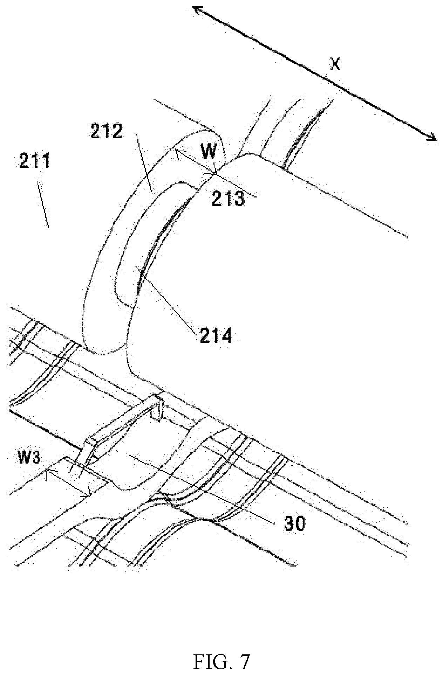

FIG. 7 is a schematic structural diagram of arranging a sampling assembly 30 inside a gap between two battery cells 20.

In an embodiment of this application, a battery includes a plurality of battery cells 20. A gap 213 is formed between two battery cells 20 adjacent along a first direction X, and the sampling assembly 30 is arranged inside the gap 213. Herein, that "a gap is formed between two adjacent battery cells" may be that a gap is formed between two battery cells 20 when end covers or electrode terminals of the two battery cells 20 are not in contact with each other, or that a gap is formed when end covers or electrode terminals of the two battery cells are in contact with each other but there is a spacing between portions of the battery cells other than the contact portions. For example, in an embodiment of this application shown in FIG. 7, an electrode terminal 214 protrudes from an end cover 212 of the battery cell 20, and two adjacent battery cells 20 are electrically connected through the electrode terminal 214. Therefore, between end covers 212 of the two battery cells 20, there is a spacing between portions other than electrically connected portions of the electrode terminal 214, so that a gap is formed. By arranging the sampling assembly 30 inside the gap 213 formed between adjacent battery cells 20, space occupied by the sampling assembly 30 can be reduced, and unoccupied space of the battery cell can be efficiently utilized to arrange the sampling assembly 30, thereby making a structure more compact and improving overall energy density of the battery. The electrical connection between the electrode terminals 214 may be implemented in series or in parallel.

A support member 303 is sandwiched inside the gap 213. In this way, the support member 303 can be positioned conveniently and the support member 303 can be installed. Optionally, a width W3 of the support member 303 in a first direction X is approximately the same as a width W of the gap 213. In this way, the support member 303 can maintain and stabilize a position at which two battery cells 20 are connected, limit excessive relative movement between the two battery cells 20, and improve structural stability. In addition, this can prevent a situation in which the support member 303 loosens to affect connection between the sampling assembly 30 and the electrode terminal 214.

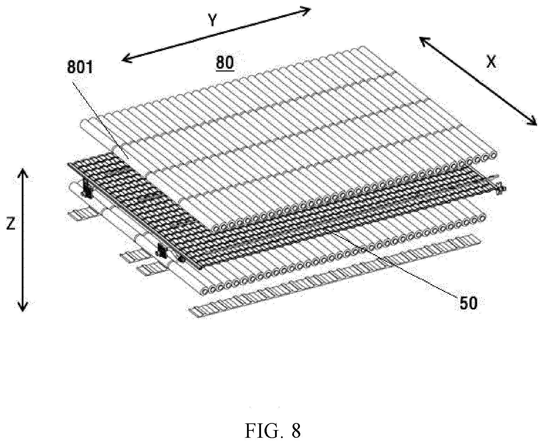

The following describes, based on FIG. 8, a structure in which a plurality of battery cells 20 in a battery are arranged as a matrix. As described above, an electrode terminal 214 in this application may be in one of various shapes such as cylinder, cuboid, cube, gengon, or the like. In this embodiment, the electrode terminal is described as a cylinder-shaped structure. In addition, the battery cell 20 may be a cuboid, cube, or cylinder. In this embodiment, the battery cell 20 is described as a structure that is a cylinder whose axis coincides with an axis of the cylinder-shaped electrode terminal (that is, in a cross section perpendicular to the axis, a circumferential side face B of a housing of the battery cell and a circumferential side face of the electrode terminal are concentric).

FIG. 8 is a schematic structural diagram of arranging battery cells 20 as a matrix according to an embodiment of this application. The battery cell 20 and the electrode terminal 214 are both cylinder-shaped. The plurality of battery cells 20 are arranged in the first direction X (namely, an axial direction of the battery cells 20) and electrically connected to form a battery cell column 801. A plurality of battery cell columns 801 are arranged in a second direction Y to form a battery cell matrix 80. The second direction Y is perpendicular to the first direction X. That is, in this battery cell matrix 80, the first direction X is a column direction, and the second direction Y is a row direction. By collecting voltage or temperature signals of electrode terminals 214 between battery cells 20 adjacent in the column direction Y, a voltage or temperature status of each battery cell 20 arranged in the column direction X can be learned, and safety of each battery cell can be controlled effectively. In addition, a plurality of battery cell columns 801 are arranged in the row direction (the Y direction) of the battery cell matrix 80, which can properly utilize arrangement space of the battery 10 and maximize the overall energy density of the battery 10.

In addition, as shown in FIG. 8, a plurality of layers of battery cell matrices 80 are arranged in a third direction Z that is perpendicular to the column direction X and the row direction Y of the battery cell matrix 80. In the plurality of layers of battery cell matrices 80, adjacent two layers of battery cell matrices 80 are arranged alternately. To be specific, a battery cell column 801 included in one layer of battery cell matrix 80 is arranged inside a gap between two adjacent battery cell columns 801 of another layer of battery cell matrix 80, or inside a gap between an outermost battery cell column 801 of another layer of battery cell matrix 80 and another component, adjacent to the outermost battery cell column 801, of the battery. By arranging the plurality of layers of battery cell matrices 80 alternately, gaps between battery cell columns 80 can be sufficiently utilized, and energy density of the battery can be further improved.

As shown in FIG. 8, a separation component 50 is arranged between two layers of battery cell matrices 80 to separate them. When a plurality of layers of battery cell matrices 80 are configured, the separation component 50 is arranged between layers to facilitate assembling. In addition, the separation component 50 can support the layers of battery cell matrices 80 arranged on two sides of the separation component 50.

Optionally, the separation component 50 is a thermal management component of the battery. The thermal management component can accommodate fluid, to adjust temperatures of a plurality of battery cells. Herein, the fluid may be liquid or air, and adjusting a temperature means heating or cooling a plurality of battery cells. When cooling or decreasing a temperature of the battery cell 20, the thermal management component is configured to accommodate cooling fluid to decrease the temperatures of a plurality of battery cells. In this case, the thermal management component may also be referred to as cooling component, cooling system, cooling plate, or the like. The fluid accommodated therein may also be referred to as cooling medium or cooling fluid, and more specifically, may be referred to as cooling liquid or cooling air. In addition, the thermal management component may alternatively be configured to heat the plurality of battery cells to increase their temperatures. This is not limited in this embodiment of this application. Optionally, the fluid may circulate to achieve a better temperature adjustment effect. Optionally, the fluid may be water, a mixture of water and glycol, air, or the like.

By disposing the separation component 50 as a thermal management component, temperature of two layers of battery cell matrices 80 can be adjusted by using a single thermal management component, thereby increasing thermal management efficiency, reducing arrangement space, and helping improve energy density of the battery.

In addition, as shown in FIG. 8, the separation component 50 can fit a contour of a circumferential side face of each battery cell 20 in the battery cell matrix 80 to form a wave shape including alternately arranged convex and concave portions in a YZ cross section perpendicular to the X direction of the battery cell matrix 80. Specifically, the convex and concave portions each corresponds to a gap between adjacent battery cell columns 801 of two layers of battery cell matrices 80 separated by the separation component 50, and the convex and concave portions extend along the X direction of the battery cell matrices 80.

Optionally, in a third direction Z, the sampling assembly 30 is arranged on each of two sides of the separation component 50, to perform sampling for each of the two layers of battery cell matrices 80 separated by the separation component 50. As described above, the separation component 50 is arranged between two layers of battery cell matrices 80. By arranging the sampling assembly 30 on each of two sides of the separation component 50 in the third direction Z, the separation component 50 can be utilized to install and support the sampling assemblies 30 on both sides, space inside the battery can be sufficiently utilized, and the energy density can be improved effectively.

In some embodiments, the third direction Z is a vertical direction. In this way, gravity of the battery cell 20 can be utilized to implement abutting of the abutting portion 311, without a need to additionally arranging another component to apply force.

A surface 322 (with reference to FIG. 5(b)) of a support member 303 that faces the separation component 50 forms a shape that fits the separation component 50. To be specific, if the separation component 50 is flat plate-shaped, the surface 322 of the support member 303 forms a flat plate shape; or if the separation component 50 is wave-shaped, the surface 322 of the support member 303 forms a wave shape accordingly. In this way, the separation component 50 can be sufficiently utilized to support the support member 303.

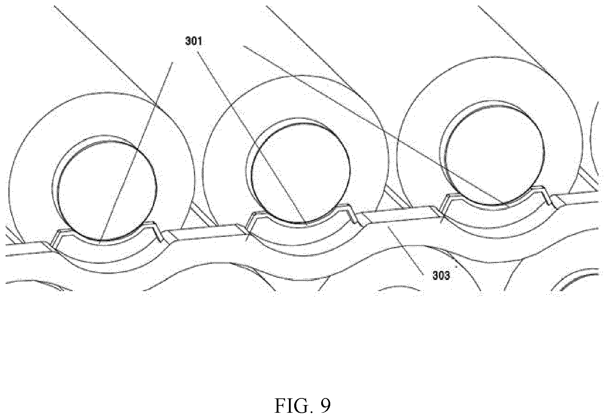

FIG. 9 is a schematic structural diagram of a support member 303 to which a plurality of connected connection members 301 are fastened according to an embodiment of this application. As shown in FIG. 9, the support member 303 extends along a row direction Y of a battery cell matrix 80, and there are a plurality of (which is two or more, and is 3 in the figure) connection members 301. At least two connection members 301 are electrically connected to make at least two electrode terminals 214 against which the at least two connection members 301 abut equipotential. That is, a plurality of battery cells 20 that are adjacent to each other in the second direction Y are respectively electrically connected to a plurality of connection members 301 that are adjacent to each other in the row direction Y.

Because the sampling assembly 30 has a plurality of connection members 301 arranged along the second direction Y and each connection member 301 is connected to a circumferential side face B of an electrode terminal 214 of a corresponding battery cell 20, the sampling assembly 30 can collect electrical signals of a plurality of battery cells 20 arranged in the second direction Y. In addition, electrode terminals 214 of the plurality of battery cells 20 electrically connected to the plurality of connection members 301 of the sampling assembly 30 have equal potential, thereby achieving voltage balance between the battery cells 20 and improving consistency of the battery cells.

In addition, when a plurality of battery cell columns 801 are arranged in the second direction Y of the battery cell matrix 80 in FIG. 8, a plurality of connection members 301 are required, to collect signals of the electrode terminals 214 of all battery cell columns arranged in the second direction Y. In this embodiment of this application, two or more connection members 301 are arranged as one set, and one set of connection members 301 are fastened to one support member 303. A plurality of sets of such structures are arranged to form a structure in which both series connection and parallel connection are included. This can avoid accumulative errors of installation.

In an embodiment of this application, the electrode terminal 214 that protrudes from the end cover 212 is arranged at each of two ends of the battery cell 20 in the first direction X, and the electrode terminals 214 of two adjacent battery cells 20 are arranged opposite to each other and welded directly. To be specific, the electrode terminals 214 at both positive and negative ends of the battery cell 20 protrude from the end cover 212, and the electrode terminals 214 protruding from the end cover 212 are electrically connected through soldering. This eliminates the need to additionally arrange a mechanism for electrical connection, and can reduce a size of a structure achieving electrical connection and sufficiently utilize space inside the battery 10 for arranging the battery cells 20, thereby improving the energy density of the battery 10.

Further, when two electrode terminals 214 are electrically connected through direct soldering, a soldered seam is formed in the soldering region. An abut region between an abutting portion 311 and the electrode terminal 214 avoids a soldering region of the electrode terminal 214. For example, the abutting portion 311 of the sampling assembly 30 and the soldering region are staggered in the first direction X, or a convex opening for soldering is formed, so that the soldering region does not protrude from the circumferential side face B of the electrode terminal 214. In this way, a decrease in sampling precision can be avoided and assembly precision can be improved.

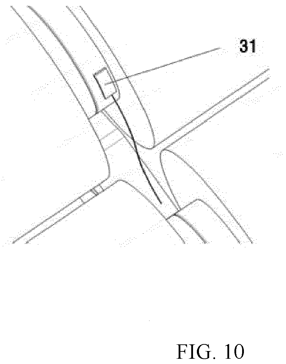

FIG. 10 is a schematic structural diagram of a temperature sampler 31 of a sampling assembly 30 according to an embodiment of this application.

In an embodiment of this application, the sampling assembly 30 further includes a temperature sampler 31. When electrode terminals 214 of two adjacent battery cells 20 are arranged opposite to each other, the temperature sampler 31 is disposed on another electrode terminal 214 that is of the two electrode terminals 214 and that is different from the electrode terminal 214 that is in contact with the connection member 301. In this way, voltage and temperature signals of the battery can be collected at the same time, further improving safety of the battery.

The foregoing describes the battery and electrical apparatus according to embodiments of this application. The following describes a preparation method of battery according to an embodiment of this application. For the parts not described in detail, reference may be made to the foregoing embodiments.

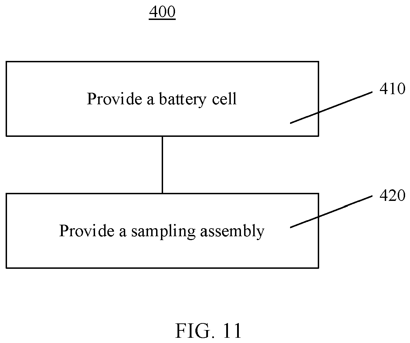

FIG. 11 is a schematic flowchart of a preparation method 400 of battery according to an embodiment of this application. As shown in FIG. 11, the method 400 may include the following steps:

410: Provide a battery cell 20, where the battery cell 20 includes an end cover 212 and an electrode terminal 214, the end cover 212 is arranged at an end portion of the battery cell 20 along a first direction X, the electrode terminal 214 is arranged on the end cover 212 and protrudes toward a direction facing away from inside the battery cell 20, the electrode terminal 214 includes two end faces A and a circumferential side face B, the two end faces A are arranged along the first direction X, and the circumferential side face B connects the two end faces A.

420: Provide a sampling assembly 30, where the sampling assembly 30 abuts against the circumferential side face B, to collect an electrical signal of the battery cell 20.

In conclusion, it should be noted that the foregoing embodiments are merely intended to describe the technical solutions of this application but not to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of each embodiment of this application.

## Claims

1. A battery, comprising:
a battery cell, comprising an end cover and an electrode terminal, wherein the end cover is arranged at an end portion of the battery cell along a first direction, the electrode terminal is arranged on the end cover and protrudes toward a direction facing away from inside the battery cell, the electrode terminal comprises two end faces and a circumferential side face, the two end faces are arranged along the first direction, and the circumferential side face connects the two end faces; and
a sampling assembly, abutting against the circumferential side face, to collect an electrical signal of the battery cell.

2. The battery according to claim 1, wherein the sampling assembly comprises a connection member and a support member, the connection member is configured to abut against the electrode terminal, and the connection member is fastened to the support member.

3. The battery according to claim 1 or 2, wherein the connection member has an abutting portion and a foot portion that are connected to each other, the foot portion is fixedly connected to the support member, the abutting portion has elasticity, and the abutting portion abuts against the electrode terminal.

4. The battery according to claim 3, wherein the connection member has two foot portions, and two ends of the abutting portion are connected to the two foot portions, respectively.

5. The battery according to claim 3 or 4, wherein the abutting portion is in surface contact with the electrode terminal and fits a shape of the circumferential side face of the electrode terminal.

6. The battery according to claim 5, wherein an area of a contact surface between the electrode terminal and the abutting portion is more than 1/6 of an entire circumferential area of the circumferential side face.

7. The battery according to claim 3 or 4, wherein the abutting portion is in point contact with the electrode terminal and there are two or more contact points.

8. The battery according to any one of claims 3 to 7, wherein a position at which the abutting portion abuts against the electrode terminal is coated with a conductive medium.

9. The battery according to any one of claims 3 to 8, wherein the sampling assembly further comprises a transmission line, the transmission line is configured to transmit an electrical signal to a signal processor, the transmission line and the foot portions are embedded inside the support member, and the transmission line is electrically connected to the foot portions.

10. The battery according to any one of claims 3 to 9, wherein there is a gap between the abutting portion and the support member in an abutting direction, to provide an elastic deformation space for the abutting portion.

11. The battery according to claim 10, wherein the support member is provided with a concave portion, the concave portion matches the electrode terminal in shape, and the concave portion is arranged opposite to the abutting portion and is recessed toward a direction facing away from the abutting portion, to form the gap.

12. The battery according to any one of claims 2 to 11, wherein in the first direction, a width of the connection member is less than a height by which the electrode terminal protrudes from the end cover.

13. The battery according to any one of claims 1 to 12, wherein the battery comprises a plurality of battery cells, a gap is formed between two battery cells adjacent along the first direction, and the sampling assembly is arranged inside the gap.

14. The battery according to claim 13, wherein the support member is arranged inside the gap.

15. The battery according to any one of claims 1 to 14, wherein the plurality of battery cells are arranged in the first direction and electrically connected to form a battery cell column, a plurality of battery cell columns are arranged in a second direction to form a battery cell matrix, and the second direction is perpendicular to the first direction.

16. The battery according to claim 15, wherein the support member extends along the second direction, there are a plurality of connection members, and at least two connection members are electrically connected to make at least two electrode terminals against which the at least two connection members abut equipotential.

17. The battery according to claim 15 or 16, wherein a plurality of layers of battery cell matrices are arranged in a third direction, and the third direction is perpendicular to the first direction and the second direction.

18. The battery according to claim 17, wherein a separation component is arranged between two layers of battery cell matrices to separate them.

19. The battery according to claim 18, wherein in the third direction, the sampling assembly is arranged on each of two sides of the separation component to perform sampling for each of the two layers of battery cell matrices separated by the separation component.

20. The battery according to claim 18 or 19, wherein a surface of the support member that faces the separation component forms a shape that fits the separation component.

21. The battery according to any one of claims 1 to 20, wherein the electrode terminal is arranged at each end of the battery cell in the first direction, and the electrode terminals of two adjacent battery cells are arranged opposite to each other and soldered directly.

22. The battery according to claim 21, wherein an abutting region between the sampling assembly and the electrode terminal avoids a soldering region of the electrode terminal.

23. An electrical apparatus, comprising the battery according to any one of claims 1 to 22, wherein the battery is configured to supply electric energy.

24. A preparation method of battery, comprising:
providing a battery cell, wherein the battery cell comprises an end cover and an electrode terminal, the end cover is arranged at an end portion of the battery cell along a first direction, the electrode terminal is arranged on the end cover and protrudes toward a direction facing away from inside the battery cell, the electrode terminal comprises two end faces and a circumferential side face, the two end faces are arranged along the first direction, and the circumferential side face connects the two end faces; and
providing a sampling assembly, wherein the sampling assembly abuts against the circumferential side face, to collect an electrical signal of the battery cell.
